# EUROPÄISCHE PATENTSCHRIFT

(11) **EP 1 659 279 B1**
(45) Veröffentlichungstag und Bekanntmachung des Hinweises auf die Patenterteilung: **26.09.2007**
(21) Anmeldenummer: 04105838.9
(22) Anmeldetag: 17.11.2004
(51) Int. Cl.: F02D 41/04, B62D 5/06

(54) **Verfahren zum kontrollierten Abstellen einer mit einer hydraulischen Lenkunterstützung ausgestatteten Brennkraftmaschine**
Method for the controlled stopping of a combustion engine having a hydraulic power steering assistance
Méthode pour l'arrêt contrôlé d'un moteur à combustion contenant une assistance de direction hydraulique

(43) Veröffentlichungstag der Anmeldung: 24.05.2006
(73) Patentinhaber: Ford Global Technologies, LLC, A subsidary of Ford Motor Company, Dearborn, MI 48126 (US)
(72) Erfinder: Kramer, Ulrich, 51427 Bergisch Gladbach (DE); Lemmen, Markus, 47803 Krefeld (DE); Weimann, Ulla, 45468 Mülheim an der Ruhr (DE)
(74) Vertreter: Drömer, Hans-Carsten

(56) Entgegenhaltungen:
- EP-A- 1 132 245
- EP-A- 1 396 622
- DE-A1- 10 123 037
- US-A- 4 406 951

## Beschreibung

Die Erfindung betrifft ein Verfahren zum kontrollierten Abstellen einer Brennkraftmaschine, die mit einer hydraulischen Lenkunterstützung ausgestattet ist, wobei eine von der Brennkraftmaschine angetriebene Hydraulikpumpe über eine Versorgungsleitung, die sich an den Auslaß der Hydraulikpumpe anschließt, das für die Lenkunterstützung erforderliche Drucköl liefert.

Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren. Dabei steht einerseits die verbesserte d.h. effektivere Verbrennung im Vordergrund der Bemühungen. Andererseits können aber auch bestimmte Strategien im Hinblick auf den grundsätzlichen Betrieb der Brennkraftmaschine zielführend sein.

Ein Konzept zur Verbesserung des Kraftstoffverbrauchs eines Fahrzeuges besteht beispielsweise darin, die Brennkraftmaschine - statt sie im Leelauf weiter zu betreiben - abzuschalten, wenn kein momentaner Leistungsbedarf besteht. In der Praxis bedeutet dies, daß zumindest bei Fahrzeugstillstand die Brennkraftmaschine ausgeschaltet wird. Ein Anwendungsfall ist der Stop-and-Go-Verkehr, wie er sich beispielsweise im Stau auf Autobahnen und Landstraßen einstellt. Im innerstädtischen Verkehr ist der Stop-and-Go-Verkehr infolge der vorhandenen und nicht aufeinander abgestimmten Ampelanlagen nicht mehr die Ausnahme, sondern sogar die Regel. Weitere Anwendungsfälle bieten beschrankte Bahnübergänge und dergleichen.

Problematisch bei den Konzepten, welche zur Verbesserung des Kraftstoffverbrauchs die Brennkraftmaschine bei fehlendem Bedarf abschalten, ist die Notwendigkeit die Brennkraftmaschine wieder zu starten. Probleme bereitet das Neustarten, weil bei unkontrolliertem Abstellen der Brennkraftmaschine, die Kurbel- und die Nockenwelle in einer beliebigen und zudem nicht bekannten Stellung zum Stehen kommen. Folglich ist die Position der Kolben in den einzelnen Zylindern der Brennkraftmaschine ebenfalls nicht bekannt und dem Zufall überlassen. Diese Informationen sind aber für einen unkomplizierten und möglichst schnellen und damit kraftstoffsparenden Neustart unerläßlich.

Bei einer Brennkraftmaschine, die mit einer elektronisch geregelten Zündung und/oder einer elektronisch geregelten Einspritzung ausgestattet ist, liefern an der Kurbelwelle angeordnete Marker Signale über die Kurbelwinkelstellung an mit der Motorsteuerung verbundene Sensoren zur Steuerung des Zünd- und des Einspritzzeitpunktes. Zur Generierung dieser Signale ist es aber zunächst erforderlich, die Kurbelwelle in Drehung zu versetzen. Direkt zu Beginn des Neustarts und des Starts im allgemeinen besteht Unklarheit über den richtigen Einspritz- und Zündzeitpunkt, so daß eine Einlaufphase zur Synchronisation der Kurbelwinkelstellung einerseits und der Motorbetriebsparameter andererseits erforderlich wird. Zudem müssen Geräte zum Starten bzw. Neustarten der Brennkraftmaschine vorgesehen werden, beispielsweise ein konventioneller Anlasser oder ein ähnliches Gerät, das geeignet ist, die Kurbelwelle zwangsweise in Drehung zu versetzen, wie beispielsweise ein Elektromotor.

Um den Neustart zu vereinfachen, werden nach dem Stand der Technik verschiedene Konzepte vorgeschlagen.

Die deutsche Offenlegungsschrift DE 42 30 616 schlägt beispielsweise vor, die Winkellage der Kurbelwelle, welche beim Abschalten registriert wird, zu speichern und für den Neustart zu verwenden, so daß die geeigneten Zündzeitpunkte und Einspritzzeitpunkte unmittelbar zur Verfügung stehen. Diese Vorgehensweise hat sich aber in der Praxis nicht bewährt, da die gespeicherten Informationen über die Stellung der Kurbelwelle zu ungenau sind.

Andere Lösungsansätze präferieren - wie die vorliegende Erfindung auch - Verfahren zum kontrollierten Abstellen der Brennkraftmaschine. Das kontrollierte Abstellen besteht dabei darin, ganz bestimmte Kurbelwinkelpositionen - sogenannte Vorzugspositionen - bewußt beim Abschalten der Brennkraftmaschine anzufahren.

Die Endstellung der Kurbelwelle wird dabei nicht mehr dem Zufall überlassen und mehr oder weniger genau registriert, sondern es werden gezielt für den Neustart vorteilhafte Kurbelwinkelstellungen herbeigeführt.

Bei Brennkraftmaschinen mit Direkteinspritzung ist es bei geeigneter Kurbelwinkelstellung sogar ohne Starter möglich, aus dem Stillstand direkt zu starten bzw. neu zu starten. Dabei wird Kraftstoff direkt in die Brennräume der stillstehenden Brennkraftmaschine eingespritzt und mittels einer Zündkerze gezündet, so daß die Explosion des Luft-Kraftstoffgemisches die Kolben in Bewegung bringt, wodurch die Kurbelwelle in Drehung versetzt wird.

Diese Art des Startens bzw. Neustartens erfordert aber die Einhaltung bestimmter Randbedingungen. Insbesondere muß die Kurbelwelle - wie bereits erwähnt - in einer bestimmten Position bzw. in einem bestimmten Kurbelwinkelbereich stehen. Insofern sind gerade bei Brennkraftmaschinen mit Direkteinspritzung Verfahren zum kontrollierten Abstellen zielführend.

Ein Verfahren zum kontrollierten Abstellen einer Brennkraftmaschine wird beispielsweise in der WO 01/48373 offenbart. Die WO 01/48373 lehrt die Anwendung eines Verfahrens, bei dem nach dem Abschalten d.h. nach Beendigung des regulären Betriebes der Brennkraftmaschine eine Verstellvorrichtung aktiviert und angesteuert wird, mit der die Kurbelwelle und/oder die Nockenwelle in eine vorgebbare vorteilhafte Winkelstellung bewegt wird. Dabei können sowohl aktive wie passive Verstellvorrichtungen zum Einsatz kommen.

Als aktive Verstellvorrichtung kann ein Elektromotor dienen, der ein Drehmoment auf die Kurbelwelle überträgt und diese nach dem Abschalten der Brennkraftmaschine in die gewünschte Position dreht, welche dann bis zum Neustarten der Brennkraftmaschine beibehalten wird. In der WO 01/48373 werden auch aktive Verstellvorrichtungen beschrieben, welche Mittel zur Aktivierung der Einspritzung und Zündung der Brennkraftmaschine nach Beendigung ihres regulären Betriebes aufweisen. Diese Mittel werden eingesetzt, um gezielt Verbrennungsvorgänge in den Zylindern zu initiieren, mit denen ein bestimmtes Drehmoment auf die Kurbelwelle übertragen wird, so daß eine vorgebbare vorteilhafte Kurbelwinkelstellung angefahren werden kann.

Passive Verstellvorrichtungen können aber gemäß der WO 01/48373 ebenfalls eingesetzt werden, wobei diese passiven Verstellvorrichtungen nach Beendigung des regulären Betriebs der Brennkraftmaschine die im Nachlauf der Kurbelwelle noch vorhandene Drehbewegung ausnutzen und in der Art beeinflussen, daß die Kurbelwelle in der vorgegebenen vorteilhaften Kurbelwellenstellung zum Stillstand kommt. Als passive Verstellvorrichtung werden Mittel vorgeschlagen, die beispielsweise eine Gaswechselventilsteuerung umfassen, welche bei geeigneter Ansteuerung ein Bremsmoment auf die Brennkraftmaschine bzw. Kurbelwelle überträgt, so daß die Verzögerung der Welle und damit ihre Endstellung steuerbar wird.

Die in der WO 01/48373 aufgezeigten Verstellvorrichtungen sind aber nicht geeignet, die Endstellung der Kurbelwelle mit der nötigen Genauigkeit anzusteuern. Zudem machen die aktiven Verstellvorrichtungen entweder zusätzliche Bauteile - wie unter Umständen noch nicht vorhandene Elektromotoren - zur Aufbringung eines Verstelldrehmomentes erforderlich, oder sie arbeiten wie bei der Initiierung gezielter Verbrennungsvorgänge zum Anfahren der vorgegebenen Kurbelwinkelstellung mittels einer zusätzlichen Kraftstoffeinspritzung und -zündung. Gerade das letztgenannte Verfahren, welches die Verwendung von Kraftstoff erfordert, steht in krassem Gegensatz zu dem grundsätzlichen Ziel der Abschaltung der Brennkraftmaschine, nämlich durch das Abstellen der Brennkraftmaschine Kraftstoff zu sparen und damit den Kraftstoffverbrauch eines Fahrzeuges zu optimieren.

Ein Verfahren zur Auslaufsteuerung einer Brennkraftmaschine, bei dem gezielt die Gasaustauschventile der Brennkraftmaschine zur Ansteuerung der Vorzugspositionen verwendet werden, ist in der WO 01/44636 A2 beschrieben. Durch geeignete Ansteuerung d.h. durch geeignetes Öffnen und Schließen der Gasaustauschventile wird dabei Einfluß genommen auf den Brennraumdruck und damit auf das von den Gaskräften über den Kolben und die Pleuelstange auf die Kurbelwelle ausgeübte Drehmoment. Dieses Verfahren setzt aber eine Brennkraftmaschine voraus, die über eine zumindest teilweise variable Ventilsteuerung verfügt. Zudem ist eine komplexe und daher aufwendige Steuerung erforderlich.

Die EP 1 132 245 B1 beschreibt eine sogenannte Abschaltsteuerungseinrichtung für Brennkraftmaschinen. Das vorgestellte System basiert auf einem Steuergerät, welches einen Kopplungsmechanismus steuert, mittels dessen die Brennkraftmaschine mit einem Elektromotor koppelbar ist, wobei der Elektromotor und die Brennkraftmaschine entweder miteinander verbunden werden oder voneinander getrennt werden, falls die Brennkraftmaschine angehalten werden soll. Im letztgenannten Fall wird eine vorhandene Hilfsmaschine nicht von der Brennkraftmaschine, sondern von dem Elektromotor angetrieben. Das Steuergerät ist als zusätzliches Bauteil bzw. Bauteilgruppe vorzusehen.

Die DE 31 30 704 A1 betrifft eine hydraulische Pumpenantriebsanlage für Kraftfahrzeuge. In der hydraulischen Pumpenantriebsanlage wird ein Anlasser verwendet, um eine Pumpe anzutreiben. Die Antriebswelle des Anlassers ist mit einem Pumpenflügelrad der Pumpe verbunden und kann mit dem Schwungrad des Kraftfahrzeugmotors in Eingriff gebracht werden, um den Kraftfahrzeugmotor zu starten. Ein Steuerkreis ist vorgesehen, um den Anker und die Feldwicklung oder die Feldwicklungen des Anlassers zum Starten des Kraftfahrzeugmotors in Reihe und nach erfolgreichem Start parallel zueinander zu schalten. Der Steuerkreis regelt auch ein Ventil in der hydraulischen Anlage, das als Druckminderungsventil arbeitet, um die während des Startvorganges des Kraftfahrzeugmotors auf en Anlasser wirkende Last der hydraulischen Pumpe auf ein Kleinstmaß herabzudrücken.

Vor diesem Hintergrund ist es die Aufgabe der vorliegenden Erfindung, ein Verfahren der gattungsbildenden Art d. h. gemäß dem Oberbegriff des Anspruchs 1 aufzuzeigen, mit dem gezielt - nach dem Abstellen der Brennkraftmaschine - eine für den Neustart der Brennkraftmaschine vorteilhafte, vorgebbare Endstellung der Kurbelwelle angefahren werden kann und mit dem die nach dem Stand der Technik bekannten Nachteile überwunden werden.

Gelöst wird diese Aufgabe durch ein Verfahren zum kontrollierten Abstellen einer Brennkraftmaschine, die mit einer hydraulischen Lenkunterstützung ausgestattet ist, wobei eine von der Brennkraftmaschine angetriebene Hydraulikpumpe über eine Versorgungsleitung, die sich an den Auslaß der Hydraulikpumpe anschließt, das für die Lenkunterstützung erforderliche Drucköl liefert, und das dadurch gekennzeichnet ist, daß das Antriebsmoment der Hydraulikpumpe beeinflußt und in der Art gesteuert wird, daß die nach Abschalten der Zündung und/oder der Kraftstoffzufuhr von der Brennkraftmaschine bis zu ihrem Stillstand abgegebene Energie mittels des steuerbaren Antriebsmoments der Hydraulikpumpe kontrolliert in der Weise verbraucht wird, daß die Kurbelwelle der Brennkraftmaschine in einer vorbestimmbaren Position angehalten wird.

Gemäß dem erfindungsgemäßen Verfahren wird das Antriebsmoment der Hydraulikölpumpe genutzt, um nach Abschalten der Brennkraftmaschine die gewünschte Endstellung der Kurbelwelle anzufahren.

Hierzu wird das Antriebsmoment in der Art beeinflußt, daß die nach Abschalten der Zündung und/oder der Kraftstoffzufuhr von der Brennkraftmaschine bis zu ihrem Stillstand abgegebene Energie mittels des steuerbaren Antriebsmoments der Hydraulikpumpe kontrolliert in der Weise verbraucht wird, daß die Brennkraftmaschine d. h. die Kurbel- bzw. Nockenwelle in einer vorbestimmbaren Position angehalten wird.

Mit der Hydraulikpumpe der Lenkunterstützung wird ein grundsätzlich schon vorhandenes Bauteil der Brennkraftmaschine verwendet, um ein kontrolliertes Abstellen zu bewerkstelligen. Das Vorsehen zusätzlicher Verstellvorrichtungen ist nicht erforderlich. Insbesondere muß keine aktive Verstellvorrichtung, beispielsweise ein Elektromotor, wie dies die WO 01/48373 vorschlägt, vorgesehen werden, um nach dem Abschalten der Brennkraftmaschine die Kurbelwelle in die gewünschte Position zu drehen.

In diesem Zusammenhang kann die Hydraulikpumpe als passive Verstellvorrichtung bezeichnet werden, die ein Drehmoment auf die Kurbelwelle ausübt bis die Kurbelwelle - vorzugsweise in der gewünschten Vorzugsposition - zum Stillstand kommt. Im Vergleich zu einer aktiven Verstellvorrichtung bietet eine passive Verstellvorrichtung den Vorteil, daß ihr Energieverbrauch niedriger ist, da sie eine Drehbewegung der Kurbelwelle nicht initiiert, sondern lediglich eine vorhandene Drehbewegung der Kurbelwelle in geeigneter Weise verzögert.

Durch die Verwendung der Hydraulikpumpe zum kontrollierten Abstellen der Brennkraftmaschine wird somit die der Erfindung zugrunde liegende Aufgabe gelöst, nämlich ein Verfahren aufzuzeigen, mit dem gezielt - nach dem Abstellen der Brennkraftmaschine - eine für den Neustart der Brennkraftmaschine vorteilhafte, vorgebbare Endstellung der Kurbelwelle angefahren werden kann.

Weitere vorteilhafte Ausführungsformen des erfindungsgemäßen Verfahrens werden im Zusammenhang mit den Unteransprüchen erörtert.

Vorteilhaft sind auch Ausführungsformen des Verfahrens, bei denen die vorbestimmbare Position eine Vorzugsposition ist und die Kurbelwelle in dieser Vorzugsposition angehalten wird.

Diese Ausführungsform des Verfahrens ist vorteilhaft, weil das Anfahren einer Vorzugsposition günstig für einen Neustart ist.

Ein derartiges Verfahren gestattet beispielsweise bei Brennkraftmaschinen mit Direkteinspritzung ein Starten ohne Starter d.h. direkt aus dem Stillstand zu starten, wofür lediglich Kraftstoff in die Brennräume der stillstehenden Brennkraftmaschine eingespritzt und mittels einer Zündkerze gezündet werden muß.

Zur Beeinflussung des Antriebsmomentes der Hydraulikpumpe können unterschiedliche Maßnahmen ergriffen werden, mit denen die von der Hydraulikpumpe von der Kurbelwelle abgegriffene Leistung bzw. die von der Hydraulikpumpe benötigte Energie variiert wird. Mit anderen Worten gesagt, die als Verbraucher anzusehende Hydraulikpumpe wird in der Art betrieben, daß der Energieverbrauch der Hydraulikpumpe im Rahmen des Auslaufvorganges der Kurbelwelle einen Verlauf aufweist, bei dem die Rotation der Kurbelwelle genau dann zum Erliegen kommt, wenn die Kurbelwelle sich in einer gewünschten Vorzugsposition befindet.

Vorteilhaft sind Ausführungsformen des Verfahrens, bei denen zur Beeinflussung des Antriebmoments der Hydraulikpumpe Mittel vorgesehen werden, mit denen der Öldruck in der Versorgungsleitung beeinflußbar ist.

Vorteilhaft sind dabei Ausführungsformen des Verfahrens, bei denen zur Beeinflussung des Antriebmoments der Hydraulikpumpe ein Absperrelement, vorzugsweise ein elektrisch stufenlos steuerbares Ventil, in der Versorgungsleitung angeordnet wird.

Infolge der auch nach Abstellen der Brennkraftmaschine noch vorhandenen Drehbewegung der Kurbelwelle fördert die mittels der Kurbelwelle angetriebene Hydraulikpumpe weiter Drucköl in die Versorgungsleitung.

Das in der Versorgungsleitung angeordnete Absperrelement gestattet eine Einflußnahme auf den für das Antriebsmoment der Hydraulikpumpe maßgeblichen Druck, nämlich auf den Druck am Auslaß der Hydraulikpumpe.

Nimmt der Druck in der Versorgungsleitung zu, muß die Hydraulikpumpe gegen einen erhöhten Öldruck fördern, was ein größeres Antriebsmoment erfordert bzw. zwangsläufig zu einer Zunahme des notwendigen Antriebsmomentes der Hydraulikpumpe führt.

Durch Verkleinerung bzw. Vergrößerung des Strömungsquerschnittes des Absperrelementes und dem damit veränderten Strömungswiderstand kann der Druck in der Versorgungsleitung stromaufwärts des Absperrelementes - zwischen Absperrelement und Auslaß der Hydraulikpumpe - vergrößert bzw. verringert werden. Das für den Antrieb der Hydraulikpumpe erforderliche Antriebsmoment ist aber gerade von diesem Druck abhängig, so daß durch Öffnen und Schließen des Absperrelementes Einfluß auf das Antriebsmoment genommen werden kann.

Ein Schließen des Absperrelementes führt zu einem erhöhten Öldruck in der Versorgungsleitung, wodurch ein größeres Antriebsmoment erforderlich wird. Umgekehrt führt ein Öffnen des Absperrelementes zu einem niedrigeren Druck in der Versorgungsleitung, so daß das für den Betrieb der Hydraulikpumpe erforderliche Antriebsmoment abnimmt.

Durch Variation des Antriebsmomentes wird die Last, welche von der Hydraulikpumpe - als Verbraucher - von der Kurbelwelle abgegriffen wird, variiert. Die nach Abstellen der Brennkraftmaschine im Nachlauf der Kurbelwelle noch vorhandene Drehbewegung wird durch Steuerung des Antriebsmomentes der Hydraulikpumpe in der Art beeinflußt, daß die Kurbelwelle in der vorgegebenen vorteilhaften Kurbelwellenstellung zum Stillstand kommt.

Vorteilhaft ist es, als Absperrelement ein elektrisch stufenlos steuerbares Ventil zu verwenden. Dies erhöht die Genauigkeit mit der eine vorbestimmte Position der Kurbelwelle angefahren werden kann, da eine Feinabstimmung des Öldrucks in der Versorgungsleitung ermöglicht wird.

Vorteilhaft sind dabei Ausführungsformen des Verfahrens, bei denen das Absperrelement mit einer Motorsteuerung verbunden ist, da die Motorsteuerung unter anderem Kenntnisse über weitere für die Steuerung des Absperrelementes nützliche Betriebsparameter hat.

Um präzise eine bestimmte Vorzugsposition der Kurbelwelle anfahren zu können, ist nämlich eine Vielzahl von Informationen notwendig bzw. hilfreich. Dabei kann auf alle bereits für die übliche Motorsteuerung gemessenen und/oder abgeleiteten Daten zurückgegriffen werden, insbesondere auf die Motordrehzahl, den Kurbelwellenwinkel, die Motortemperatur beziehungsweise eine hiermit korrelierende Temperatur wie die Kühlmitteltemperatur und/oder den Ansaugdruck im Ansaugkrümmer. Die genannten Größen haben erfahrungsgemäß den stärksten Einfluß auf die Auslaufbewegung der Brennkraftmaschine bzw. der Kurbelwelle.

Im Zusammenhang mit dem erfindungsgemäßen Verfahren ist es erforderlich bzw. hilfreich, zu ermitteln, wie viel kinetische Energie nach Abstellen der Brennkraftmaschine im Antriebstrang bzw. in der Kurbelwelle vorliegt.

Ein Modell für die Auslaufbewegung einer Brennkraftmaschine wird beispielsweise in der europäischen Patentanmeldung mit der Anmeldenummer 03101379.0 beschrieben. Dieses Modell berücksichtigt die aktuelle kinetische Energie des Antriebsstranges, die Reibungsverluste und/oder die Kompressions- und Expansionsvorgänge in den Zylindern der Brennkraftmaschine. Ein derartiges Modell kann aufgrund theoretischer Überlegungen gewonnen und in Form mathematischer Gleichungen implementiert werden. Vorzugsweise wird das Modell jedoch ganz oder zumindest teilweise empirisch gewonnen d. h. durch Beobachtung des Motorverhaltens und Aufbereitung der dabei gewonnenen Meßdaten (z. B. als eine Lookup-Tabelle).

Vorteilhaft sind auch Ausführungsformen des Verfahrens, bei denen zur Beeinflussung des Antriebsmomentes eine Hydraulikpumpe mit einer veränderbaren Fördercharakteristik, insbesondere mit einem steuerbaren variablen Durchsatz, verwendet wird.

Diese Variante des erfindungsgemäßen Verfahrens verwendet eine Hydraulikpumpe, deren Fördercharakteristik bzw. Durchsatz durch Verstellen verändert werden kann, so daß grundsätzlich eine Variation des Antriebsmomentes ermöglicht wird, ohne daß zwingend ein Absperrelement in der Versorgungsleitung vorgesehen zu werden braucht.

Vorteilhaft sind dabei Ausführungsformen des Verfahrens, bei denen zur Beeinflussung des Antriebsmomentes eine Hydraulikpumpe mit einem veränderbaren Hubvolumen verwendet wird.

Beispielsweise kann die Verwendung einer verstellbaren Axialkolbenpumpe dabei zielführend sein, wobei ein variabler Kolbenhub eine Möglichkeit darstellt, eine variable Fördercharakteristik bzw. einen variablen Durchsatz zu verwirklichen.

Wird der Durchsatz der Hydraulikpumpe erhöht, fördert die Pumpe größere Mengen an Drucköl in die Versorgungsleitung. Die Hydraulikpumpe benötigt hierfür ein erhöhtes Antriebsmoment bzw. eine erhöhte Antriebsleistung. Umgekehrt kann die notwendige Antriebsleistung durch Verringerung des Durchsatzes verkleinert werden.

Vorteilhaft sind in diesem Zusammenhang auch Ausführungsformen des Verfahrens, bei denen zur Beeinflussung des Antriebsmomentes eine Hydraulikpumpe mit einer veränderbaren Auslaßöffnung verwendet wird.

Ein variabel verstellbarer Auslaß d. h. ein Auslaß mit einer veränderbaren Auslaßöffnung gestattet einerseits die Einstellung des Auslaßquerschnitts und damit eine Einflußnahme auf den Durchsatz der Hydraulikpumpe. Andererseits kann durch Veränderung des Auslaßquerschnitts der Strömungswiderstand des Auslasses verändert werden d. h. der Druck am Auslaß der Hydraulikpumpe und damit der für das Antriebsmoment der Hydraulikpumpe maßgebliche Druck kann verändert und gesteuert werden.

Wie bereits oben im Zusammenhang mit dem Absperrelement ausgeführt, ist es auch bei Verwendung einer Hydraulikpumpe vorteilhaft, diese mit einer Motorsteuerung zu verbinden.

Im folgenden wird die Erfindung anhand von drei Ausführungsbeispielen gemäß den Figuren 1 bis 3 näher beschrieben. Hierbei zeigt:
- Fig. 1: schematisch eine erste Ausführungsform einer Lenkunterstützung,

- Fig. 2: schematisch eine zweite Ausführungsform einer Lenkunterstützung, und
- Fig. 3: schematisch eine dritte Ausführungsform einer Lenkunterstützung.

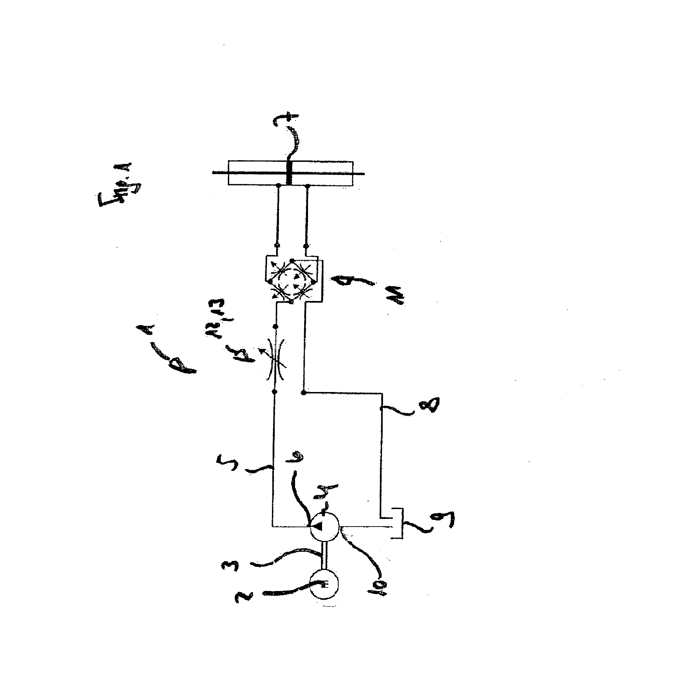

Figur 1 zeigt schematisch eine erste Ausführungsform einer Lenkunterstützung 1. Das Verfahren zum kontrollierten Abstellen einer Brennkraftmaschine 2 wird im Zusammenhang mit der Erläuterung der dargestellten Lenkunterstützung 1 näher beschrieben.

Die Brennkraftmaschine 2 ist zur Realisierung einer Hilfskraft für eine Servolenkung mit einer hydraulischen Lenkunterstützung 1 ausgestattet. Ein wesentlicher Bestandteil der Lenkunterstützung 1 ist die Hydraulikpumpe 4, die von der Brennkraftmaschine 2 mittels der Kurbelwelle 3 angetrieben wird, was beispielsweise über einen Keilriemen erfolgen kann (nicht dargestellt).

Die Hydraulikpumpe 4 liefert über eine Versorgungsleitung 5, die sich an den Auslaß 6 der Hydraulikpumpe 4 anschließt, das für die Lenkunterstützung 1 erforderliche Drucköl an einen Arbeitszylinder 7, beispielsweise einer Zahnstangen-Hydrolenkung. Die Ölrücklaufleitung 8 zur Rückführung des Drucköls mündet in einen Tankbehälter 9, der der Bevorratung des Drucköls dient und gleichzeitig die Hydraulikpumpe 4 über den Einlaß 10 mit Drucköl speist. Zwischen Hydraulikpumpe 4 und Arbeitszylinder 7 ist ein Drehschieber-Ventil 11 angeordnet.

Um die Brennkraftmaschine 2 kontrolliert abstellen zu können d. h. die Kurbelwelle 3 in einer vorbestimmbaren Position zum Stillstand zu bringen, müssen Maßnahmen ergriffen werden, mit denen das Antriebmoment der Hydraulikpumpe 4 beeinflußt und in der Art gesteuert werden kann, daß die nach Abschalten der Zündung und/oder der Kraftstoffzufuhr von der Brennkraftmaschine 2 bis zu ihrem Stillstand abgegebene Energie mittels des steuerbaren Antriebsmoments der Hydraulikpumpe 4 kontrolliert in der Weise verbraucht wird, daß die Kurbelwelle 3 in einer vorbestimmbaren Position angehalten wird.

Bei der in Figur 1 dargestellten Ausführungsform ist zur Beeinflussung des Antriebmoments der Hydraulikpumpe 4 ein Absperrelement 12 in der Versorgungsleitung 5 angeordnet.

Infolge der auch nach Abstellen der Brennkraftmaschine 2 noch vorhandenen Drehbewegung der Kurbelwelle 3 fördert die mittels der Kurbelwelle 3 angetriebene Hydraulikpumpe 4 weiter Drucköl in die Versorgungsleitung 5.

Das in der Versorgungsleitung 5 angeordnete Absperrelement 12 gestattet eine Einflußnahme auf den für das Antriebsmoment der Hydraulikpumpe 4 maßgeblichen Druck, nämlich auf den Druck am Auslaß 6 der Hydraulikpumpe 4.

Nimmt der Druck in der Versorgungsleitung 5 zu, muß die Hydraulikpumpe 4 gegen einen erhöhten Öldruck fördern, was ein größeres Antriebsmoment erfordert bzw. zwangsläufig zu einer Zunahme des notwendigen Antriebsmomentes der Hydraulikpumpe 4 führt.

Durch Verkleinerung bzw. Vergrößerung des Strömungsquerschnittes des Absperrelementes 12 und dem damit veränderten Strömungswiderstand kann der Druck in der Versorgungsleitung 5 stromaufwärts des Absperrelementes 12 - zwischen Absperrelement 12 und Auslaß 6 der Hydraulikpumpe 4 - vergrößert bzw. verringert werden. Das für den Antrieb der Hydraulikpumpe 4 erforderliche Antriebsmoment ist von diesem Druck abhängig, so daß durch Öffnen und Schließen des Absperrelementes 12 Einfluß auf das Antriebsmoment genommen wird.

Ein Schließen des Absperrelementes 12 führt zu einem erhöhten Öldruck in der Versorgungsleitung 5, wodurch ein größeres Antriebsmoment erforderlich wird. Umgekehrt führt ein Öffnen des Absperrelementes 12 zu einem niedrigeren Druck in der Versorgungsleitung 5, so daß das für den Betrieb der Hydraulikpumpe 4 erforderliche Antriebsmoment abnimmt.

Als Absperrelement 12 wird ein elektronisch gesteuertes Ventil 13 verwendet, wodurch die Genauigkeit beim Anfahren der Vorzugsposition der Kurbelwelle 3 gesteigert werden kann.

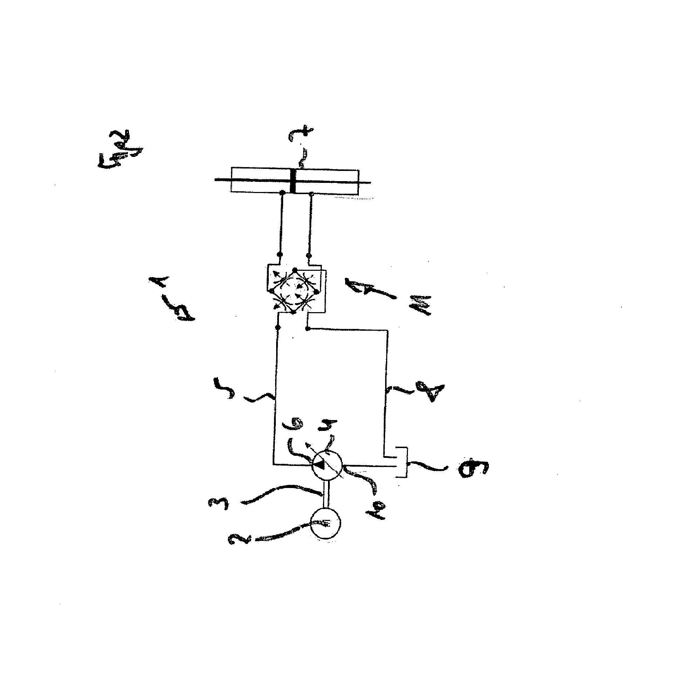

Figur 2 zeigt schematisch eine zweite Ausführungsform einer Lenkunterstützung 1. Es sollen nur die Unterschiede zu der in Figur 1 dargestellten ersten Ausführungsform erörtert werden, weshalb im übrigen bezug genommen wird auf Figur 1. Für dieselben Bauteile wurden dieselben Bezugszeichen verwendet.

Im Gegensatz zu der Ausführungsform gemäß Figur 1 verfügt die in Figur 2 gezeigte Lenkunterstützung 1 zur Beeinflussung des Antriebsmomentes der Hydraulikpumpe 4 nicht über ein Absperrelement 12 in der Versorgungsleitung 5, sondern über eine Hydraulikpumpe 4, deren Fördercharakteristik bzw. Durchsatz veränderbar ist, so daß eine Variation des Antriebsmomentes möglich ist, ohne daß ein Absperrelement 12 in der Versorgungsleitung 5 angeordnet zu werden braucht.

Ein variabler Durchsatz kann durch ein veränderbares Hubvolumen oder eine veränderbare Auslaßöffnung 6 verwirklicht werden. Ein variabel verstellbarer Auslaß 6 d.h. ein Auslaß 6 mit einer veränderbaren Auslaßöffnung 6 gestattet die Einstellung des Auslaßquerschnitts und damit direkt eine Einflußnahme auf den Durchsatz der Hydraulikpumpe 4, aber auch durch Veränderung des Strömungswiderstandes des Auslasses 6 die Veränderung des Drucks am Auslaß 6 der Hydraulikpumpe 4 und damit eine Veränderung des für das Antriebsmoment der Hydraulikpumpe 4 maßgeblichen Drucks.

Wird der Durchsatz der Hydraulikpumpe 4 erhöht, fördert die Pumpe 4 größere Mengen an Drucköl in die Versorgungsleitung 5. Die Hydraulikpumpe 4 benötigt hierfür ein erhöhtes Antriebsmoment bzw. eine erhöhte Antriebsleistung. Umgekehrt kann die notwendige Antriebsleistung durch Verringerung des Durchsatzes verkleinert werden.

Figur 3 zeigt schematisch eine dritte Ausführungsform einer Lenkunterstützung 1. Es sollen nur die Unterschiede zu der in Figur 1 dargestellten ersten Ausführungsform erörtert werden, weshalb im übrigen bezug genommen wird auf Figur 1. Für dieselben Bauteile wurden dieselben Bezugszeichen verwendet.

Die in Figur 3 gezeigte Lenkunterstützung 1 verfügt zur Beeinflussung des Antriebsmomentes der Hydraulikpumpe 4 sowohl über ein Absperrelement 12 in der Versorgungsleitung 5, als auch über eine Hydraulikpumpe 4, deren Fördercharakteristik bzw. Durchsatz veränderbar ist, so daß zwei Mittel bzw. Maßnahmen zur Variation des Antriebsmomentes genutzt werden können, was die Flexibilität und Genauigkeit beim kontrollierten Abstellen der Brennkraftmaschine 2 erhöht.

### Bezugszeichen

- 1: Lenkunterstützung
- 2: Brennkraftmaschine
- 3: Kurbelwelle
- 4: Hydraulikpumpe
- 5: Versorgungsleitung
- 6: Auslaß, Auslaßöffnung
- 7: Arbeitszylinder
- 8: Ölrücklaufleitung
- 9: Tankbehälter
- 10: Einlaß
- 11: Drehschieber-Ventil
- 12: Absperrelement
- 13: elektronisch gesteuertes Ventil

## Patentansprüche

1. Verfahren zum kontrollierten Abstellen einer Brennkraftmaschine (2), die mit einer hydraulischen Lenkunterstützung (1) ausgestattet ist, wobei eine von der Brennkraftmaschine (2) angetriebene Hydraulikpumpe (4) über eine Versorgungsleitung (5), die sich an den Auslaß (6) der Hydraulikpumpe (4) anschließt, das für die Lenkunterstützung (1) erforderliche Drucköl liefert,
**dadurch gekennzeichnet, daß**
das Antriebsmoment der Hydraulikpumpe (4) beeinflußt und in der Art gesteuert wird, daß die nach Abschalten der Zündung und/oder der Kraftstoffzufuhr von der Brennkraftmaschine (2) bis zu ihrem Stillstand abgegebene Energie mittels des steuerbaren Antriebsmoments der Hydraulikpumpe (4) kontrolliert in der Weise verbraucht wird, daß die Kurbelwelle (3) der Brennkraftmaschine (2) in einer vorbestimmbaren Position angehalten wird.

2. Verfahren nach Anspruch 1,
**dadurch gekennzeichnet, daß**
■ die vorbestimmbare Position eine Vorzugsposition ist und die Kurbelwelle in dieser Vorzugsposition angehalten wird.

3. Verfahren zum kontrollierten Abstellen einer Brennkraftmaschine (2) nach Anspruch 1 oder 2,
**dadurch gekennzeichnet, daß**
zur Beeinflussung des Antriebmoments der Hydraulikpumpe (4) Mittel (12,13) vorgesehen werden, mit denen der Öldruck in der Versorgungsleitung (5) beeinflußbar ist.

4. Verfahren zum kontrollierten Abstellen einer Brennkraftmaschine (2) nach Anspruch 3,
**dadurch gekennzeichnet, daß**
zur Beeinflussung des Antriebmoments der Hydraulikpumpe (4) ein Absperrelement (12) in der Versorgungsleitung (5) angeordnet wird.

5. Verfahren zum kontrollierten Abstellen einer Brennkraftmaschine (2) nach Anspruch 4,
**dadurch gekennzeichnet, daß**
als Absperrelement (12) ein elektrisch stufenlos steuerbares Ventil (13) verwendet wird.

6. Verfahren zum kontrollierten Abstellen einer Brennkraftmaschine (2) nach einem der vorherigen Ansprüche,
**dadurch gekennzeichnet, daß**
zur Beeinflussung des Antriebsmomentes eine Hydraulikpumpe (4) mit einer veränderbaren Fördercharakteristik, insbesondere mit einem steuerbaren variablen Durchsatz, verwendet wird.

7. Verfahren zum kontrollierten Abstellen einer Brennkraftmaschine (2) nach Anspruch 6,
**dadurch gekennzeichnet, daß**
zur Beeinflussung des Antriebsmomentes eine Hydraulikpumpe (4) mit einem veränderbaren Hubvolumen verwendet wird.

8. Verfahren zum kontrollierten Abstellen einer Brennkraftmaschine (2) nach Anspruch 6 oder 7,
**dadurch gekennzeichnet, daß**
zur Beeinflussung des Antriebsmomentes eine Hydraulikpumpe (4) mit einer veränderbaren Auslaßöffnung (6) verwendet wird.

## Claims

1. Method for the controlled stopping of an internal combustion engine (2) which is equipped with a hydraulic power steering system (1), wherein a hydraulic pump (4) which is driven by the internal combustion engine (2) supplies the pressurized oil which is necessary for the power steering system (1) via a supply line (5) which is connected to the outlet (6) of the hydraulic pump (4), **characterized in that** the drive torque of the hydraulic pump (4) is influenced and controlled in such a way that the energy which is output by the internal combustion engine (2) up to its coming to a standstill after the ignition and/or the fuel supply has been shut down is consumed in such a controlled fashion by means of the controllable drive torque of the hydraulic pump (4) that the crankshaft (3) of the internal combustion engine (2) is stopped in a predeterminable position.

2. Method according to Claim 1, **characterized in that**
• the predeterminable position is a preferred position and the crankshaft is stopped in this preferred position.

3. Method for the controlled stopping of an internal combustion engine (2) according to Claim 1 or 2, **characterized in that** in order to influence the output torque of the hydraulic pump (4) means (12, 13) are provided with which the oil pressure in the supply line (5) can be influenced.

4. Method for the controlled stopping of an internal combustion engine (2) according to Claim 3, **characterized in that** in order to influence the drive torque of the hydraulic pump (4) a shut-off element (12) is arranged in the supply line (5).

5. Method for the controlled stopping of an internal combustion engine (2) according to Claim 4, **characterized in that** a valve (13) which can be controlled electrically in an infinitely variable fashion is used as a shut-off element (12).

6. Method for the controlled stopping of an internal combustion engine (2) according to one of the preceding claims, **characterized in that** in order to influence the drive torque a hydraulic pump (4) is used with a variable delivery characteristic, in particular with a controllable, variable throughput rate.

7. Method for the controlled stopping of an internal combustion engine (2) according to Claim 6, **characterized in that** in order to influence the drive torque a hydraulic pump (4) with a variable stroke volume is used.

8. Method for the controlled stopping of an internal combustion engine (2) according to Claim 6 or 7,
**characterized in that** in order to influence the drive torque a hydraulic pump (4) with a variable outlet opening (6) is used.

## Revendications

1. Procédé d'arrêt contrôlé d'un moteur à combustion interne (2) équipé d'une direction à assistance hydraulique (1), une pompe hydraulique (4) entraînée par le moteur à combustion interne (2) délivrant l'huile sous pression nécessaire à la direction à assistance (1) par le biais d'une conduite d'alimentation (5) qui se raccorde à la sortie (6) de la pompe hydraulique (4), **caractérisé en ce que** le couple d'entraînement de la pompe hydraulique (4) est influencé et commandé de telle sorte qu'après avoir coupé le contact et/ou l'arrivée de carburant, l'énergie délivrée par le moteur à combustion interne (2) jusqu'à son arrêt est utilisée de manière contrôlée au moyen du couple d'entraînement commandable de la pompe hydraulique (4) de telle sorte que le vilebrequin (3) du moteur à combustion interne (2) soit arrêté dans une position prédéfinie.

2. Procédé selon la revendication 1, **caractérisé en ce que** la position prédéfinie est une position préférentielle et le vilebrequin est arrêté dans cette position préférentielle.

3. Procédé d'arrêt contrôlé d'un moteur à combustion interne (2) selon la revendication 1 ou 2, **caractérisé en ce que** des moyens (12, 13) qui permettent d'influencer la pression d'huile dans la conduite d'alimentation (5) sont prévus pour influencer le couple d'entraînement de la pompe hydraulique (4).

4. Procédé d'arrêt contrôlé d'un moteur à combustion interne (2) selon la revendication 3, **caractérisé en ce qu'**un élément de fermeture (12) est disposé dans la conduite d'alimentation (5) pour influencer le couple d'entraînement de la pompe hydraulique (4) .

5. Procédé d'arrêt contrôlé d'un moteur à combustion interne (2) selon la revendication 4, **caractérisé en ce que** l'élément de fermeture (12) utilisé est une vanne (13) à commande électrique progressive.

6. Procédé d'arrêt contrôlé d'un moteur à combustion interne (2) selon l"une des revendications précédentes, **caractérisé en ce qu'**une pompe hydraulique (4) ayant une caractéristique de refoulement modifiable, ayant notamment un débit variable commandable est utilisée pour influencer le couple d'entraînement.

7. Procédé d'arrêt contrôlé d'un moteur à combustion interne (2) selon la revendication 6, **caractérisé en ce qu'**une pompe hydraulique (4) ayant une cylindrée variable est utilisée pour influencer le couple d'entraînement.

8. Procédé d'arrêt contrôlé d'un moteur à combustion interne (2) selon la revendication 6 ou 7, **caractérisé en ce qu'**une pompe hydraulique (4) ayant une ouverture de sortie (6) variable est utilisée pour influencer le couple d'entraînement.
